# EUROPÄISCHE PATENTSCHRIFT

(11) **EP 3 379 215 B1**
(45) Veröffentlichungstag und Bekanntmachung des Hinweises auf die Patenterteilung: **05.05.2021**
(21) Anmeldenummer: 18159137.1
(22) Anmeldetag: 28.02.2018
(51) Int. Cl.: G01K 1/00

(54) **VERFAHREN ZUR ERMITTLUNG EINER INNENRAUMTEMPERATUR EINES FAHRZEUGES UND ENTSPRECHENDES COMPUTERPROGRAMMPRODUKT**
METHOD FOR DETERMINING A TEMPERATURE INSIDE A PASSENGER COMPARTMENT OF A VEHICLE AND CORRESPRONDING COMPUTER PROGRAM PRODUCT
PROCÉDÉ DE DÉTERMINATION D'UNE TEMPÉRATURE INTÉRIEURE D'UN VÉHICULE ET PRODUIT DE PROGRAMME INFORMATIQUE CORRESPONDANT

(30) Priorität: 22.03.2017 DE 102017204841
(43) Veröffentlichungstag der Anmeldung: 26.09.2018
(73) Patentinhaber: VOLKSWAGEN AKTIENGESELLSCHAFT, 38440 Wolfsburg (DE)
(72) Erfinder: Kaufmann, Thorsten, 38259 Salzgitter Bad (DE); Hübscher, Sabrina, 38554 Weyhausen (DE)

(56) Entgegenhaltungen:
- DE-A1- 10 133 388
- DE-A1-102013 226 140
- - Anonymus ET AL: "Automotive Sensor Signal Conditioner with LIN and PWM Interface ZSSC3170 Datasheet 2016 Integrated Device Technology, Inc.", internet art., 30 May 2016 (2016-05-30), pages 1-30, XP055472348, internet Retrieved from the Internet: URL:https://www.idt.com/document/dst/zssc3 170-datasheet [retrieved on 2018-05-03]

## Beschreibung

Die vorliegende Erfindung bezieht sich auf ein Verfahren sowie ein Computerprogrammprodukt.

Aus dem Stand der Technik sind Temperatursensoren für Fahrzeuge bekannt, welche dazu dienen, die Innenraumtemperatur im Fahrzeug zu ermitteln. Derartige Temperatursensoren können als unbelüftete Innenraum-Temperatursensoren (auch UIF, unbelüftete Innenraum-Temperaturfühler) ausgeführt sein, d. h. der Temperatursensor muss in diesem Fall nicht zwangsbelüftet werden.

Ein unbelüfteter Innenraum-Temperaturfühler ist bspw. aus der DE 20 2009 001 069 U1 bekannt. Dabei ist der Temperaturfühler mit zwei elektrischen temperatursensorspezifischen Anschlusselementen verbunden, welche aus dem Sensorgehäuse herausgeführt sind.

Die Schrift DE 101 33 388 A1 offenbart einen Temperatursensor für ein Fahrzeug, welcher zur Erfassung der Innenraumtemperatur des Fahrzeugs ausgeführt ist und im Fahrzeug anordenbar ist. Die Schrift D2 DE 10 2013 226 140 A1 offenbart eine Luftmassenmessvorrichtung für ein Fahrzeug mit einem Temperatursensor, der zusammen mit einer Auswerteeinheit auf einem Trägerelement angeordnet ist. Das Datenblatt "Automotive Sensor Signal Conditioner with LIN and PWM Interface" ZSSC3170 Datasheet, 2016 Integrated Device Technology, Inc., internet art., 30. Mai 2016, Seiten 1-30, XP055472348, offenbart einen Temperatursensor mit einer modularen Schnittstelleneinheit und einer Speichereinheit.

Oft haben herkömmliche UIF, welche bspw. in einem Klimabedienteil angeordnet sind, eine solche sensorspezifische Schnittstelle, über welche die Rohdaten des UIF bereitgestellt werden. Ein Steuergerät des Klimabedienteils liest dann diese Rohdaten über die Schnittstelle aus, und ermittelt anhand der Rohdaten die Innenraum-Temperatur. Die Software des Steuergeräts muss dazu speziell an den Temperatursensor angepasst werden. So kann es erforderlich sein, dass das Steuergerät zum einen die notwendigen Informationen kennen muss, um die Rohdaten auswerten zu können, und zum anderen so parametrisiert sein muss, dass Fahrzeuginformationen und der konkrete Einbauort des Sensors bei der Bestimmung der Temperatur berücksichtigt werden. Meist geschieht dies dadurch, dass in Abhängigkeit von dem Fahrzeug, dem Einbauort und dem Sensor eine spezielle Software für das Steuergerät hergestellt und/oder angepasst wird. Somit ist eine aufwendige Anpassung und Herstellung des Steuergeräts und ggf. auch des gesamten Klimabedienteils zur Nutzung eines konkreten Temperatursensor notwendig.

Nachteilhaft bei den bekannten Lösungen ist daher, dass oft ein erheblicher Anpassungs- und/oder Herstellungsaufwand entsteht, um einen Temperatursensor in einem Fahrzeug zu nutzen. Häufig ist es dabei erforderlich, dass der Temperatursensor in eine andere Komponente des Fahrzeuges, wie einem Klimabedienteil, integriert werden muss.

Um eine korrekte Bestimmung der Temperatur anhand der Rohdaten des Sensors zu gewährleisten, muss dann ein Steuergerät des Fahrzeuges an den Sensor in aufwendiger Weise angepasst werden. Diese Anpassung kann dabei technisch aufwendig und herausfordernd sein.

Es ist daher eine Aufgabe der vorliegenden Erfindung, die voranstehend beschriebenen Nachteile zumindest teilweise zu beheben. Insbesondere ist es Aufgabe der vorliegenden Erfindung, ein verbessertes Verfahren sowie Computerprogrammprodukt zur Temperaturerfassung vorzuschlagen.

Die voranstehende Aufgabe wird gelöst durch ein Verfahren mit den Merkmalen des Anspruchs 1 sowie durch ein Computerprogrammprodukt mit den Merkmalen des Anspruchs 5. Weitere Merkmale und Details der Erfindung ergeben sich aus den jeweiligen Unteransprüchen, der Beschreibung und den Zeichnungen. Dabei gelten Merkmale und Details, die im Zusammenhang mit dem erfindungsgemäßen Verfahren beschrieben sind, selbstverständlich auch im Zusammenhang mit dem erfindungsgemäßen Computerprogrammprodukt, und jeweils umgekehrt, so dass bezüglich der Offenbarung zu den einzelnen Erfindungsaspekten stets wechselseitig Bezug genommen wird bzw. werden kann.

Ein Temperatursensor für ein Fahrzeug kann zur Erfassung einer Innenraumtemperatur des Fahrzeuges ausgeführt und (hierzu) im Fahrzeug anordenbar sein und/oder eingebaut werden.

Bspw. ist dabei das Fahrzeug als ein Kraftfahrzeug und/oder Personenkraftfahrzeug und/oder Elektrofahrzeug ausgebildet.

Hierbei ist insbesondere vorgesehen, dass der Temperatursensor wenigstens eine der nachfolgenden Einheiten umfasst:
- wenigstens eine (insbesondere elektronische) Verarbeitungseinheit zur Bestimmung mindestens eines (insbesondere digitalen) Temperaturwertes durch eine Auswertung von (digitalen oder analogen) Erfassungsrohdaten des Temperatursensors,
- wenigstens eine modulare Schnittstelleneinheit für einen Datenaustausch mit einem Steuergerät des Fahrzeuges, sodass der wenigstens eine Temperaturwert über die Schnittstelleneinheit für das Steuergerät bereitstellbar ist.

In anderen Worten kann bei einem Temperatursensor eine Auswertung der Rohdaten des Temperatursensors (Erfassungsrohdaten) nicht erst im (extern vom Temperatursensor vorgesehenen) Steuergerät des Fahrzeuges erfolgen, sondern bereits durch den Temperatursensor selbst. Dies hat den Vorteil, dass eine aufwendige sensorspezifische Anpassung des Steuergeräts zur Auswertung der Rohdaten nicht notwendig ist. So können auch unterschiedliche Temperatursensoren mit dem Steuergerät verwendet werden, ohne dass das Steuergerät für jeden dieser Temperatursensoren in unterschiedlicher Weise angepasst werden muss. Um diese Flexibilität noch zu verbessern, kann eine modulare Schnittstelleneinheit als Schnittstelle zum Steuergerät vorgesehen sein.

Insbesondere wird dabei unter "modular" verstanden, dass eine definierte Schnittstelle (insbesondere durch die Schnittstelleneinheit) vorgesehen ist. Diese Schnittstelle ermöglicht den Datenaustausch gemäß einer vorgegebenen Definition (bspw. einem Schnittstellenprotokoll). Vorzugsweise ist es dabei vorgesehen, dass das Steuergerät lediglich zum Datenaustausch gemäß diesem Schnittstellenprotokoll ausgeführt sein muss, um auch Temperaturwerte von unterschiedlichen Arten von Temperatursensoren über die Schnittstelle auslesen zu können. Auf eine Anpassung des Steuergeräts an unterschiedlichen Schnittstellen von unterschiedlichen Arten von Temperatursensoren kann damit verzichtet werden. Bevorzugt implementiert der Temperatursensor die modulare Schnittstelle durch die Schnittstelleneinheit. Besonders bevorzugt implementiert das Steuergerät die modulare Schnittstelle durch eine Steuergerät-Schnittstelle, welche mit der Schnittstelleneinheit zum Datenaustausch (ggf. elektrisch) verbunden werden kann. Weiter ist es denkbar, dass diese Schnittstelle keinerlei sensorspezifische (d. h. bspw. herstellerspezifische und/oder fahrzeug-spezifische) Anpassung aufweist, d. h. unabhängig von einem bestimmten Temperatursensor- und/oder Fahrzeugtyp ausgeführt ist.

Vorzugsweise ist der Temperatursensor ist als ein UIF (unbelüfteter Innenraum-Temperaturfühler) ausgeführt. Bevorzugt ist dabei der Temperatursensor in einem Klimabedienteil integriert. Alternativ ist der Temperatursensor als externer Temperatursensor außerhalb eines Klimabedienteils im Fahrzeug anordenbar und/oder befestigt.

Bevorzugt werden dabei unter "Erfassungsrohdaten" die "rohen" Daten des Temperatursensors verstanden, welche unmittelbar bei der Erfassung der Temperatur bestimmt werden. Dies können bspw. elektrische Signale sein, welche z. B. anhand der elektrischen Eigenschaften und/oder durch eine elektrische Auswertung eines temperaturabhängigen Widerstands des Temperatursensors ermittelt werden. Allerdings erfolgt hierbei insbesondere noch keine elektronische Auswertung dahingehend, dass die Temperatur bereits unmittelbar anhand der Rohdaten bestimmt werden kann.

In anderen Worten können die Rohdaten noch nicht unmittelbar zur Bestimmung der erfassten Temperatur dienen, ohne eine Auswertung anhand von temperatursensorspezifischen und/oder fahrzeugspezifischen Informationen durchzuführen. Bspw. bezeichnet dagegen der Temperaturwert solche Informationen und/oder Daten und/oder elektrische Signale, welche bereits ohne Kenntnis des konkret verwendeten Temperatursensors und/oder des Fahrzeuges und/oder eines Einbaubereichs (Einbauposition) des Temperatursensors als die erfasste Innenraumtemperatur interpretiert werden können.

Insbesondere umfasst dabei die Verarbeitungseinheit wenigstens einen integrierten Schaltkreis und/oder einen Prozessor und/oder eine Elektronik, um ein Computerprogramm zur Auswertung auszuführen. Vorzugsweise ist dieses Computerprogramm, insbesondere als ein erfindungsgemäßes Computerprogrammprodukt, in einer Datenspeichereinheit der Verarbeitungseinheit und/oder des Temperatursensors nicht-flüchtig gespeichert. Bevorzugt kann das Computerprogramm dabei für verschiedene Fahrzeuge und/oder Einbaupositionen des Temperatursensors und/oder für verschiedene Temperatursensoren genutzt werden.

Vorteilhafterweise kann im Rahmen der Erfindung vorgesehen sein, dass die Schnittstelleneinheit als eine Bussystem-Schnittstelle ausgeführt ist, vorzugsweise als eine LIN- (Local Interconnect Network-) Bus-Schnittstelle oder als eine CAN- (Controller Area Network-) Bus-Schnittstelle. Bevorzugt ist dabei die Schnittstelleneinheit dazu ausgeführt, über ein Fahrzeug-Bussystem, insbesondere ein LIN-Bussystem oder CAN-Bussystem oder dergleichen, mit dem Steuergerät, insbesondere mit einer Steuergerät-Schnittstelle, verbunden zu werden. Dies hat den Vorteil, dass in einfacher Weise mit geringem konstruktiven Aufwand eine modulare Schnittstelle genutzt werden kann.

Es kann im Rahmen der Erfindung vorgesehen sein, dass der Temperatursensor eine Datenspeichereinheit, insbesondere einen Flash-Speicher oder dergleichen, zur nicht-flüchtigen Speicherung von wenigstens zwei unterschiedlichen Einbaubereichsinformationen umfasst, wobei die Einbaubereichsinformationen jeweils für unterschiedliche Einbaubereiche des Temperatursensors im Fahrzeug spezifisch sind. In anderen Worten sind für unterschiedliche Einbaubereiche des Temperatursensors im Fahrzeug unterschiedliche Einbaubereichsinformationen vorgesehen, sodass vorzugsweise der Temperatursensor unterschiedliche Auswertungen der Erfassungsrohdaten für unterschiedliche Einbaubereiche durchführen kann. Dies hat den Vorteil, dass das Steuergerät ohne Anpassung mit Temperatursensoren verwendet werden kann, welche in unterschiedlichen Einbaubereichen des Fahrzeuges vorgesehen sind. Auf eine Anpassung des Steuergeräts bzw. der Steuergerät-Software kann also verzichtet werden, auch wenn der Einbauort des Temperatursensors geändert wird.
Insbesondere ist hierzu eine begrenzte Anzahl vorgegebener Einbaubereiche des Fahrzeuges vorbestimmt, sodass der Temperatursensor bereits vor der Nutzung im Fahrzeug für unterschiedliche Einbaubereiche ausgelegt bzw. parametrisiert ist. Dies kann bspw. durch Erprobungsfahrten erfolgen, in denen die notwendigen Parameter für unterschiedliche Einbaubereiche gesammelt werden.

Es ist ferner denkbar, dass der Temperatursensor eine Datenspeichereinheit zur (nicht-flüchtigen) Speicherung von wenigstens zwei unterschiedlichen Einbaubereichsinformationen umfasst, wobei die Einbaubereichsinformationen jeweils für unterschiedliche Einbaubereiche des Temperatursensors im Fahrzeug spezifisch sind, sodass vorzugsweise der Temperatursensor (bspw. durch das Steuergerät) über die modulare Schnittstelleneinheit derart konfiguriert werden kann, dass der Temperatursensor (technisch unverändert) zur Erfassung der Innenraumtemperatur für wenigstens zwei unterschiedliche Einbaubereiche und/oder Fahrzeuge genutzt werden kann.

Weiter kann es möglich sein, dass wenigstens drei oder wenigstens vier oder wenigstens fünf oder wenigstens acht oder wenigstens zehn oder wenigstens 20 unterschiedliche Einbaubereiche bzw. Einbaubereichsinformationen vorgesehen bzw. vordefiniert sind. Dies ermöglicht einen besonders flexiblen Einsatz des Temperatursensors.

Ebenfalls kann ein System zur Ermittlung einer Innenraumtemperatur eines Fahrzeuges vorgesehen sein, aufweisend:
- wenigstens einen Temperatursensor, welcher zur (unmittelbaren) Erfassung der Innenraumtemperatur ausgeführt ist,
- wenigstens ein Steuergerät des Fahrzeuges, wobei das Steuergerät vorzugsweise separat und/oder baulich getrennt und/oder außerhalb angeordnet von dem Temperatursensor ausgeführt ist.

Hierbei ist insbesondere vorgesehen, dass der Temperatursensor zur Bestimmung von wenigstens einem Temperaturwert durch eine Auswertung von Erfassungsrohdaten des Temperatursensors ausgeführt ist, wobei vorzugsweise die Auswertung durch eine Verarbeitungseinheit zumindest teilweise durchgeführt wird, und bevorzugt wenigstens eine modulare Schnittstelleneinheit des Temperatursensors zum Datenaustausch mit dem Steuergerät vorgesehen ist, um den Temperaturwert für das Steuergerät bereitzustellen. Damit bringt das System die gleichen Vorteile mit sich, wie sie ausführlich mit Bezug auf einen Temperatursensor beschrieben worden sind. Zudem kann es vorgesehen sein, dass der Temperatursensor des Systems gemäß einem Temperatursensor ausgeführt ist.

Die unmittelbare Erfassung erfolgt dabei bspw. dadurch, dass der Temperatursensor ein Erfassungselement (wie einen temperaturabhängigen Widerstand) aufweist, welches elektrisch zur Erfassung und/oder Messung der Temperatur genutzt wird. Insbesondere ist dabei das Erfassungselement dem Innenraum des Fahrzeuges derart ausgesetzt, dass eine Temperaturveränderung im Innenraum eine Veränderung von (elektrischen) Eigenschaften des Erfassungselements bewirkt. Die Veränderung kann dann ggf. elektrisch ausgewertet und/oder ausgelesen werden, um die Rohdaten zu bestimmen.

Ein weiterer Vorteil im Rahmen der Erfindung ist erzielbar, wenn der Temperatursensor zum Datenaustausch über ein Kommunikationssystem, insbesondere über ein Bussystem, vorzugsweise über ein LIN-Bussystem oder CAN-Bussystem, mit dem Steuergerät über die Schnittstelleneinheit verbunden ist. Dies ermöglicht eine einfache und zuverlässige modulare Verbindung zum Datenaustausch.

Es ist ferner denkbar, dass das Steuergerät als ein Klimasteuergerät für eine Klimaanlage des Fahrzeuges ausgeführt ist. Alternativ oder zusätzlich kann das Steuergerät auch als ein anderes Steuergerät des Fahrzeuges, wie bspw. ein Fensterheber-Steuergerät oder dergleichen, ausgeführt sein. Damit kann das Steuergerät neben der Ermittlung der Innenraumtemperatur noch wenigstens eine weitere Fahrzeugfunktion bereitstellen bzw. ansteuern.

Gegenstand der Erfindung ist ein Verfahren zur Ermittlung einer Innenraumtemperatur eines Fahrzeuges. Insbesondere ist hierbei wenigstens ein Temperatursensor und wenigstens ein Steuergerät des Fahrzeuges vorgesehen. Hierbei ist vorzugsweise vorgesehen, dass zumindest einer der nachfolgenden Schritte durchgeführt wird, wobei insbesondere die Schritte nacheinander oder in beliebiger Reihenfolge durchgeführt werden, wobei bevorzugt einzelne Schritte auch wiederholt durchgeführt werden können:
- Übertragen einer (bspw. digitalen und/oder numerischen) Einbaubereichsangabe von dem Steuergerät an den Temperatursensor über ein Kommunikationssystem, wobei die Einbaubereichsangabe für einen konkreten Einbaubereich des Temperatursensors im Fahrzeug spezifisch ist,
- Durchführen einer Erfassung der Innenraumtemperatur durch den Temperatursensor zur Bestimmung von Erfassungsrohdaten,
- Durchführen einer Auswertung durch den Temperatursensor, bei welcher die Erfassungsrohdaten in Abhängigkeit von der übertragenen Einbaubereichsangabe ausgewertet werden, sodass wenigstens ein Temperaturwert bestimmt wird, vorteilhafterweise durch eine (ggf. elektronische) Verarbeitungseinheit,
- Übertragen des wenigstens einen Temperaturwertes (von dem Temperatursensor) an das Steuergerät, sodass anhand des wenigstens einen Temperaturwertes ein Ergebnis (insbesondere Messergebnis) der Innenraumtemperatur-Erfassung für das Steuergerät bereitgestellt wird, bei welchem vorzugsweise der konkrete Einbaubereich berücksichtigt ist.

Damit bringt das erfindungsgemäße Verfahren die gleichen Vorteile mit sich, wie sie ausführlich mit Bezug auf einen Temperatursensor und/oder ein System beschrieben worden sind. Zudem kann das Verfahren geeignet sein, ein System und/oder einen Temperatursensor zu betreiben.

Insbesondere kann hierbei der Vorteil erzielt werden, dass das Steuergerät ohne technische Veränderung wie einer Anpassung der Steuergerät-Software mit unterschiedlichen Temperatursensoren und/oder für unterschiedliche Einbaubereiche der Temperatursensoren und/oder für unterschiedliche Fahrzeuge eingesetzt werden kann. Vorzugsweise wird dies auch dadurch ermöglicht, dass der Temperatursensor bereits für unterschiedliche Einbaubereiche und/oder Fahrzeuge und/oder für die Nutzung einer modularen Schnittstelle zum Datenaustausch mit dem Steuergerät und/oder zur Auswertung der Erfassungsrohdaten vorkonfiguriert und/oder ausgeführt und/oder programmiert ist.

Weiter kann denkbar sein, dass über die Schnittstelleneinheit keinerlei Erfassungsrohdaten an das Steuergerät übermittelt werden, sondern insbesondere (nur) der wenigstens eine Temperaturwert. Dies ermöglicht eine einfachere Auswertung des Temperatursensors.

Gemäß einer vorteilhaften Weiterbildung der Erfindung kann vorgesehen sein, dass vor dem Durchführen der Auswertung wenigstens eine Fahrzeuginformation an den Temperatursensor, insbesondere von dem Steuergerät, vorzugsweise über das Kommunikationssystem, übertragen wird, wobei die Fahrzeuginformation für das konkrete Fahrzeug (bspw. den Fahrzeugtyp) spezifisch ist, sodass die Auswertung in Abhängigkeit von der Fahrzeuginformation durchgeführt wird, sodass insbesondere bei dem bereitgestellten Ergebnis der Innenraumtemperatur-Erfassung das konkrete Fahrzeug berücksichtigt ist. Bspw. kann die Fahrzeuginformation abhängig sein von einem bestimmten Fahrzeugtyp oder dergleichen, um so den Temperatursensor für möglichst viele unterschiedliche Fahrzeuge einsetzen zu können. Hierdurch können Kosten und der Anpassungsaufwand reduziert werden.

Weiter ist im Rahmen der Erfindung denkbar, dass das Übertragen der Einbaubereichsangabe und/oder des Temperaturwertes und/oder der Fahrzeuginformation gemäß einem modularen Schnittstellenprotokoll, vorzugsweise einem LIN-Protokoll oder CAN-Protokoll, bevorzugt über eine modulare Schnittstelleneinheit, besonders bevorzugt über einen LIN-Bus oder CAN-Bus, erfolgt. Dies ermöglicht es, dass eine definierte Schnittstelle genutzt werden kann, um eine Austauschbarkeit des Temperatursensortyps zu gewährleisten.

Außerdem ist es von Vorteil, wenn die übertragene Einbaubereichsangabe durch den Temperatursensor zur Auswahl einer Einbaubereichsinformation genutzt wird, wobei vorzugsweise die Einbaubereichsinformation in einer Datenspeichereinheit des Temperatursensors neben weiteren Einbaubereichsinformationen für weitere Einbaubereiche persistent gespeichert ist. In anderen Worten kann die Einbaubereichsangabe von dem Steuergerät an den Temperatursensor übertragen werden, um so dem Temperatursensor mitzuteilen, dass dieser die Auswertung für einen bestimmten konkreten Einbaubereich durchführen soll. Hierzu nutzt der Temperatursensor dann die Einbaubereichsinformation, durch welche entsprechend dem mitgeteilten Einbaubereich die Auswertung angepasst werden kann. Insbesondere ist es dazu erforderlich, dass vor der Verwendung des Temperatursensors im Fahrzeug verschiedene Einbaubereichsinformationen für unterschiedliche mögliche Einbaubereiche im Fahrzeug im Temperatursensor (persistent) vorgespeichert werden. Die Einbaubereichsinformationen werden bspw. dadurch ermittelt, dass Erprobungsfahrten mit dem Temperatursensor durchgeführt werden. Dabei können dann die Parameter für unterschiedliche Einbaubereiche bestimmt (und in Form der Einbaubereichsinformation hinterlegt) werden, welche zur Auswertung der Erfassungsrohdaten notwendig sind, um die für die konkrete Einbauposition korrekte Temperatur zu ermitteln.

Es ist dabei ggf. auch denkbar, dass die übertragene Einbaubereichsangabe für den Temperatursensor unspezifisch ist, sodass die Einbaubereichsangabe nur die Information über einen konkreten Einbaubereich und nicht über die Parameter umfasst. Dies ermöglicht einen flexiblen Austausch des Temperatursensors und eine einfache Ausgestaltung des Steuergeräts. Mit anderen Worten kann die Einbaubereichsangabe lediglich eine Ortsinformation über den Einbaubereich umfassen. Auch ist es ggf. möglich, dass ausschließlich temperatursensortypunabhängige Daten von dem Steuergerät an den Temperatursensor übertragen werden.

Ebenfalls Gegenstand der Erfindung ist ein Computerprogrammprodukt zur Bestimmung von wenigstens einem Temperaturwert bei einem Temperatursensor. Hierbei ist insbesondere vorgesehen, dass das Computerprogrammprodukt zur Durchführung einer Auswertung gemäß einem erfindungsgemäßen Verfahren ausgeführt ist.
Damit bringt das erfindungsgemäße Computerprogrammprodukt die gleichen Vorteile mit sich, wie sie ausführlich mit Bezug auf ein System und/oder ein erfindungsgemäßes Verfahren und/oder einen Temperatursensor beschrieben worden sind.

Insbesondere kann dabei das Computerprogrammprodukt im Temperatursensor integriert sein. Bspw. kann somit das Computerprogrammprodukt als ein temperatursensortyp-spezifisches Softwaremodul (insbesondere des UIFs) in den Temperatursensor integriert werden, und muss somit nicht mehr im Umfang des Steuergeräts, insbesondere Klimasteuergeräts, vorhanden sein. Dies reduziert den Aufwand für den Einsatz des Temperatursensors.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:
Fig. 1 eine schematische Darstellung eines Systems mit einem Temperatursensor,
Fig. 2 eine weitere schematische Darstellung von Teilen in einem Fahrzeuginnenraum,
Fig. 3 eine schematische Darstellung zur Visualisierung eines erfindungsgemäßen Verfahrens.

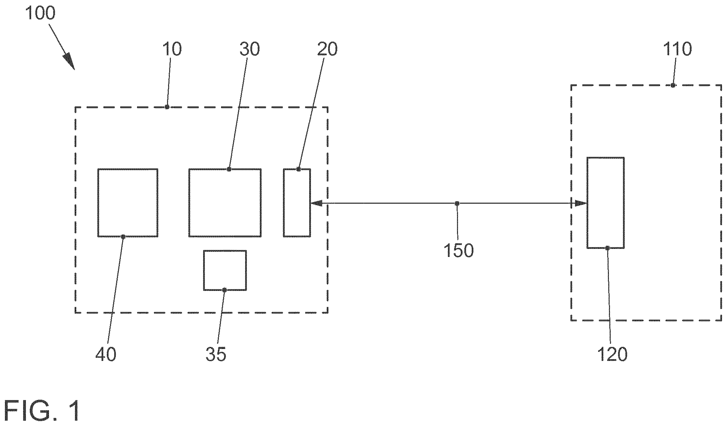

In Figur 1 ist schematisch ein System 100 mit einem Temperatursensor 10 darstellt. Bspw. umfasst dabei der Temperatursensor 10 wenigstens eine Schnittstelleneinheit 20 und/oder wenigstens eine Verarbeitungseinheit 30 und/oder wenigstens eine Datenspeichereinheit 35 und/oder wenigstens ein Erfassungselement 40. Das Erfassungselement 40 ist bspw. temperaturabhängig und/oder als elektrisches Bauelement, insbesondere als ein temperaturabhängiger Widerstand oder dergleichen, ausgeführt. Auf diese Weise kann anhand einer (elektrischen) Eigenschaft des Erfassungselements 40 ein (elektrisches) Signal bestimmt werden, welches für eine Temperaturveränderung spezifisch ist. Aus dem Signal können dann insbesondere die Erfassungsrohdaten des Temperatursensors 10 bestimmt werden, welche allerdings temperatursensortyp-spezifisch (d. h. abhängig von dem konkreten Temperatursensor) sind. Somit kann anhand der Erfassungsrohdaten noch nicht unmittelbar die erfasste Temperatur auch ohne Kenntnis über den Temperatursensor ermittelt werden. Bspw. können die Erfassungsrohdaten ein elektrisches (Strom- und/oder Spannungs-) Signal sein, welches bspw. am Erfassungselement 40 anliegt.
Auch ist es denkbar, dass die Erfassungsrohdaten durch eine elektrische oder elektronische Auswertung eines solchen Signals bestimmt werden, insbesondere aber ohne die temperatursensorspezifischen Eigenarten herauszufiltern. Daher kann durch die Verarbeitungseinheit 30 eine weitergehende Auswertung der Erfassungsrohdaten erfolgen, um wenigstens einen Temperaturwert T zu bestimmen. Der Temperaturwert T ermöglicht dabei insbesondere die unmittelbare Interpretation als eine Temperatur, ggf. unabhängig von der Kenntnis über den Temperatursensor.

Zur Bereitstellung des Temperaturwertes T an ein Steuergerät 110 des Fahrzeuges 1 ist ein Kommunikationssystem 150, insbesondere ein Bussystem 150, vorgesehen. Die Schnittstelleneinheit 20 des Temperatursensors 10 und eine Steuergerät-Schnittstelle 120 des Steuergeräts 110 dienen dabei jeweils als modulare Schnittstelle zum Kommunikationssystem 150.

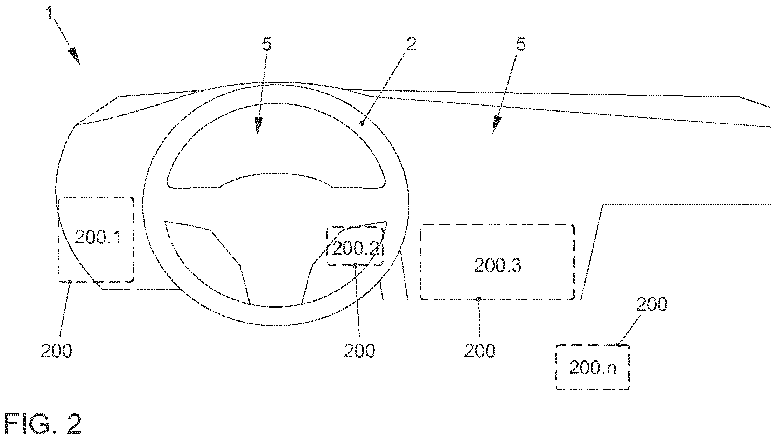

In Figur 2 sind beispielhaft unterschiedliche Einbaubereiche 200 für den Temperatursensor 10 in einem Fahrzeug 1 schematisch dargestellt. Die Einbaubereiche 200 können bspw. im Bereich einer Instrumententafel 5 des Fahrzeuges 1 vorgesehen sein. So sind schematisch links und rechts im Bereich eines Lenkrads 2 ein erster und zweiter Einbaubereich 200.1, 200.2 veranschaulicht. Auch kann im Bereich der Mittelkonsole sich ein weiterer dritter Einbaubereich 200.3 befinden. Ggf. können auch noch weitere Einbaubereiche 200 vorgesehen sein, d. h. auch ein n-ter Einbaubereich 200.n (wobei n eine beliebige ganze Zahl sein kann).

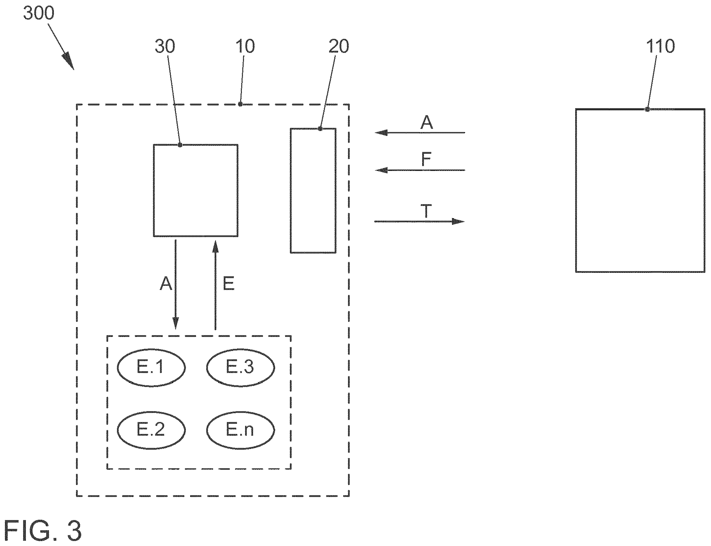

Figur 3 visualisiert schematisch ein erfindungsgemäßes Verfahren 300. Gemäß einem ersten Verfahrensschritt erfolgt hierbei ein Übertragen einer Einbaubereichsangabe A von dem Steuergerät 110 (z. B. über eine Steuergerät-Schnittstelle 120, dann über ein Kommunikationssystem 150 bis zu einer Schnittstelleneinheit 20 des Temperatursensors 10) an den Temperatursensor 10, wobei die Einbaubereichsangabe A für einen konkreten Einbaubereich 200 des Temperatursensors 10 im Fahrzeug 1 spezifisch ist. Derartige konkrete Einbaubereiche 200 sind bspw. in Figur 2 schematisch dargestellt (z. B. ein erster, zweiter und ggf. n-ter Einbaubereich 200.1, 200.2, 200.n).

Anschließend erfolgt gemäß einem zweiten Verfahrensschritt ein Durchführen einer Erfassung der Innenraumtemperatur durch den Temperatursensor 10 zur Bestimmung von Erfassungsrohdaten. Sodann kann gemäß einem dritten Verfahrensschritt ein Durchführen einer Auswertung durch den Temperatursensor 10 erfolgen, insbesondere durch eine Verarbeitungseinheit 30, bei welcher die Erfassungsrohdaten in Abhängigkeit von der übertragenen Einbaubereichsangabe A ausgewertet werden. Dies ermöglicht es, wenigstens einen Temperaturwert T zu bestimmen. Die hierbei vorgesehene Abhängigkeit von der Einbaubereichsangabe A kann gewährleisten, dass der Temperaturwert T in hinreichender Genauigkeit unter Berücksichtigung des konkreten Einbaubereichs 200 bestimmt wird, da unterschiedliche Einbaubereiche 200 eine unterschiedliche Auswertung erfordern. Die dafür notwendigen Parameter zur Auswertung können bspw. bei Erprobungsfahrten ermittelt und den dabei genutzten Einbaubereichen 200 für den Temperatursensor 10 zugeordnet werden. Somit kann bspw. der Hersteller des Temperatursensors 10 die Parametrisierung für die Auswertung für unterschiedliche Einbaubereiche 200 z. B. durch die Erprobungsfahrten bestimmen und direkt im Temperatursensor 10 hinterlegen (anstatt im Steuergerät 110). Dazu können die Parameter bspw. in Form einer Einbaubereichsinformation E im Temperatursensor 10 vorgespeichert werden. Dies hat den Vorteil, dass dem Temperatursensor 10 nach dem Einbau nur noch vom Steuergerät 110 anhand der Einbaubereichsangabe A mitgeteilt werden muss, wo dieser konkret eingebaut wurde. Es kann dann ggf. eine automatische Anpassung der Auswertung durch den Temperatursensor 10 erfolgen.

Bspw. ist es denkbar, dass für einen ersten Einbaubereich 200.1 eine erste Einbaubereichsinformation E.1, für einen zweiten Einbaubereich 200.2 eine zweite Einbaubereichsinformation E.2, für einen dritten Einbaubereich 200.3 eine dritte Einbaubereichsinformation E.3 und für einen n-ten Einbaubereich 200.n eine n-te Einbaubereichsinformation E.n persistent im Temperatursensor 10 gespeichert wird.

Anhand des Einbaubereichsangabe A kann dann die zugehörige Einbaubereichsinformation E ausgelesen werden. Diese Zuordnung ist vorgegeben, sodass bspw. die Einbaubereichsangabe A einen numerischen Wert bspw. als eine Kennung für die Einbaubereichsinformation E umfasst, welche eine eindeutige Auswahl der Einbaubereichsinformation E ermöglicht.

Auch ist es ggf. möglich, dass bei der Auswertung neben der Einbaubereichsangabe A noch eine Fahrzeuginformation F Berücksichtigung findet. Analog zur Einbaubereichsangabe A kann dann bspw. anhand der Fahrzeuginformation F durch den Temperatursensor 10 wenigstens ein Parameter für die Auswertung ausgelesen werden, welcher für die Fahrzeuginformation F vorgesehen ist. Alternativ oder zusätzlich kann die Fahrzeuginformation F diesen Parameter bereits umfassen.

Nach der Auswertung erfolgt gemäß einem vierten Verfahrensschritt ein Übertragen des wenigstens einen Temperaturwertes T an das Steuergerät 110, sodass anhand des wenigstens einen Temperaturwertes T ein Ergebnis der Innenraumtemperatur-Erfassung für das Steuergerät 110 bereitgestellt wird, bei welchem der konkrete Einbaubereich 200 berücksichtigt ist.

Die voranstehende Erläuterung der Ausführungsformen beschreibt die vorliegende Erfindung ausschließlich im Rahmen von Beispielen.

### Bezugszeichenliste

- 1: Fahrzeug
- 2: Lenkrad
- 5: Instrumententafel
- 10: Temperatursensor
- 20: Schnittstelleneinheit
- 30: Verarbeitungseinheit
- 35: Datenspeichereinheit
- 40: Erfassungselement
- 100: System
- 110: Steuergerät
- 120: Steuergerät-Schnittstelle
- 150: Kommunikationssystem, Bussystem
- 200: Einbaubereich
- 200.1: erster Einbaubereich
- 200.2: zweiter Einbaubereich
- 200.3: dritter Einbaubereich
- 200.n: n-ter Einbaubereich
- 300: Verfahren
- A: Einbaubereichsangabe
- E: Einbaubereichsinformation
- E.1: erste Einbaubereichsinformation
- E.2: zweite Einbaubereichsinformation
- E.3: dritte Einbaubereichsinformation
- E.n: n-te Einbaubereichsinformation
- F: Fahrzeuginformation
- T: Temperaturwert

## Patentansprüche

1. Verfahren (300) zur Ermittlung einer Innenraumtemperatur eines Fahrzeuges (1), wobei wenigstens ein Temperatursensor (10) und wenigstens ein Steuergerät (110) des Fahrzeuges (1) vorgesehen sind, mit den nachfolgenden Schritten:
- Übertragen einer Einbaubereichsangabe (A) von dem Steuergerät (110) an den Temperatursensor (10) über ein Kommunikationssystem (150), wobei die Einbaubereichsangabe (A) für einen konkreten Einbaubereich (200) des Temperatursensors (10) im Fahrzeug (1) spezifisch ist,
- Durchführen einer Erfassung der Innenraumtemperatur durch den Temperatursensor (10) zur Bestimmung von Erfassungsrohdaten,
- Durchführen einer Auswertung durch eine Verarbeitungseinheit (30) des Temperatursensors (10), bei welcher die Erfassungsrohdaten in Abhängigkeit von der übertragenen Einbaubereichsangabe (A) ausgewertet werden, sodass wenigstens ein Temperaturwert (T) bestimmt wird,
- Übertragen des wenigstens einen Temperaturwertes (T) an das Steuergerät (110), sodass anhand des wenigstens einen Temperaturwertes (T) ein Ergebnis der Innenraumtemperatur-Erfassung für das Steuergerät (110) bereitgestellt wird, bei welchem der konkrete Einbaubereich (200) berücksichtigt ist.

2. Verfahren (300) nach Anspruch 1,
**dadurch gekennzeichnet,**
**dass** vor dem Durchführen der Auswertung wenigstens eine Fahrzeuginformation (F) an den Temperatursensor (10) insbesondere von dem Steuergerät (110), übertragen wird, wobei die Fahrzeuginformation (F) für das konkrete Fahrzeug (1) spezifisch ist, sodass die Auswertung in Abhängigkeit von der Fahrzeuginformation (F) durchgeführt wird, sodass bei dem bereitgestellten Ergebnis der Innenraumtemperatur-Erfassung das konkrete Fahrzeug (1) berücksichtigt ist.

3. Verfahren (300) nach Anspruch 1 oder 2,
**dadurch gekennzeichnet,**
**dass** das Übertragen der Einbaubereichsangabe (A) und/oder des Temperaturwertes (T) und/oder der Fahrzeuginformation (F) gemäß einem modularen Schnittstellenprotokoll, vorzugsweise einem LIN-Protokoll, bevorzugt über eine modulare Schnittstelleneinheit (20), besonders bevorzugt über einen LIN-Bus, erfolgt.

4. Verfahren (300) nach einem der Ansprüche 1 bis 3,
**dadurch gekennzeichnet,**
**dass** die übertragene Einbaubereichsangabe (A) durch den Temperatursensor (10) zur Auswahl einer Einbaubereichsinformation (E) genutzt wird, wobei die Einbaubereichsinformation (E) in einer Datenspeichereinheit (35) des Temperatursensors (10) neben weiteren Einbaubereichsinformationen (E) für weitere Einbaubereiche (200) persistent gespeichert ist.

5. Computerprogrammprodukt zur Bestimmung von wenigstens einem Temperaturwert (T) bei einem Temperatursensor (10),
**dadurch gekennzeichnet,**
**dass** das Computerprogrammprodukt zur Durchführung einer Auswertung gemäß einem Verfahren (300) nach einem der Ansprüche 1 bis 4 ausgeführt ist.

## Claims

1. Method (300) for determining a temperature inside the passenger compartment of a vehicle (1), wherein at least one temperature sensor (10) and at least one control device (110) of the vehicle (1) are provided, comprising the following steps:
- transmitting an installation area specification (A) from the control device (110) to the temperature sensor (10) via a communication system (150), wherein the installation area specification (A) is specific to a specific installation area (200) of the temperature sensor (10) in the vehicle (1),
- carrying out an acquisition of the passenger compartment temperature by the temperature sensor (10) in order to determine raw acquisition data,
- carrying out an evaluation by a processing unit (30) of the temperature sensor (10), in which the raw acquisition data are evaluated as a function of the transmitted installation area specification (A) so that at least one temperature value (T) is determined,
- transmitting the at least one temperature value (T) to the control device (110) so that a result of the passenger compartment temperature acqusition based on the at least one temperature value (T) is provided to the control device (110), said result taking into account the specific installation area (200).

2. Method (300) according to Claim 1,
**characterized in that**
before the evaluation is carried out, at least one item of vehicle information (F) is transmitted to the temperature sensor (10), in particular by the control device (110), wherein the vehicle information (F) is specific to the specific vehicle (1) so that the evaluation is carried out as a function of the vehicle information (F) so that the specific vehicle (1) is taken into account in the provided result of the passenger compartment temperature acquisition.

3. Method (300) according to Claims 1 or 2,
**characterized in that**
the installation area specification (A) and/or the temperature value (T) and/or the vehicle information (F) is transmitted in accordance with a modular interface protocol, preferably a LIN protocol, preferably via a modular interface unit (20), particularly preferably via a LIN bus.

4. Method (300) according to any one of Claims 1 to 3,
**characterized in that**
the transmitted installation area specification (A) is used by the temperature sensor (10) to select an item of installation area information (E), the installation area information (E) being stored persistently in a data storage unit (35) of the temperature sensor (10) in addition to further installation area information (E) for further installation areas (200).

5. Computer program product for determining at least one temperature value (T) in a temperature sensor (10),
**characterized in that**
the computer program product is designed to carry out an evaluation in accordance with a method (300) according to any one of Claims 1 to 4.

## Revendications

1. Procédé (300) de détermination d'une température intérieure d'un véhicule (1), dans lequel au moins un capteur de température (10) et au moins un appareil de commande (110) du véhicule (1) sont prévus, comprenant les étapes suivantes :
- transmission d'une indication de zone de montage (A) depuis l'appareil de commande (110) au capteur de température (10) par l'intermédiaire d'un système de communication (150), dans lequel l'indication de zone de montage (A) est spécifique pour une zone de montage concrète (200) du capteur de température (10) dans le véhicule (1),
- réalisation d'une détection de la température intérieure par l'intermédiaire du capteur de température (10) afin de déterminer des données brutes de détection,
- réalisation d'une évaluation par l'intermédiaire d'une unité de traitement (30) du capteur de température (10), dans laquelle les données brutes de détection sont évaluées en fonction de l'indication de zone de montage transmise (A), de sorte qu'au moins une valeur de température (T) soit déterminée,
- transmission de l'au moins une valeur de température (T) à l'appareil de commande (110), de sorte que, au moyen de l'au moins une valeur de température (T), un résultat de la détection de température intérieure soit mis à disposition pour l'appareil de commande (110), dans lequel la zone de montage concrète (200) est prise en compte.

2. Procédé (300) selon la revendication 1,
**caractérisé en ce**
**que,** avant la réalisation de l'évaluation, au moins une information de véhicule (F) est transmise au capteur de température (10), en particulier depuis l'appareil de commande (110), l'information de véhicule (F) étant spécifique pour le véhicule concret (1), de sorte que l'évaluation soit réalisée en fonction de l'information de véhicule (F), de sorte que, dans le résultat de la détection de température intérieure mis à disposition, le véhicule concret (1) soit pris en compte.

3. Procédé (300) selon la revendication 1 ou 2,
**caractérisé en ce**
**que** la transmission de l'indication de zone de montage (A) et/ou de la valeur de température (T) et/ou de l'information de véhicule (F) est effectuée au moyen d'un protocole d'interface modulaire, de préférence un protocole LIN, de manière préférée par le biais d'une unité d'interface modulaire (20), de manière particulièrement préférée par le bais d'un bus LIN.

4. Procédé (300) selon l'une quelconque des revendications 1 à 3,
**caractérisé en ce**
**que** l'indication de zone de montage (A) transmise est utilisée par le capteur de température (10) pour la sélection d'une information de zone de montage (E), l'information de zone de montage (E) étant mémorisée de manière persistante dans une unité de mémoire de données (35) du capteur de température (10) à côté d'autres informations de zone de montage (E) pour d'autres zones de montage (200).

5. Produit de programme informatique destiné à la détermination d'au moins une valeur de température (T) par un capteur de température (10),
**caractérisé en ce**
**que** le produit de programme informatique est conçu pour la réalisation d'une évaluation conformément à un procédé (300) selon l'une quelconque des revendications 1 à 4.
